# EUROPÄISCHE PATENTSCHRIFT

(11) **EP 3 154 147 B1**
(45) Veröffentlichungstag und Bekanntmachung des Hinweises auf die Patenterteilung: **28.11.2018**
(21) Anmeldenummer: 16183499.9
(22) Anmeldetag: 10.08.2016
(51) Int. Cl.: H02J 3/24, H02J 3/36

(54) **VERFAHREN UND STEUEREINRICHTUNG ZUM STEUERN EINES STROMNETZES**
METHOD AND CONTROL DEVICE FOR CONTROLLING A POWER GRID
PROCÉDÉ ET DISPOSITIF DE COMMANDE D'UN RÉSEAU ÉLECTRIQUE

(30) Priorität: 07.10.2015 DE 102015219407
(43) Veröffentlichungstag der Anmeldung: 12.04.2017
(73) Patentinhaber: Siemens Aktiengesellschaft, 80333 München (DE)
(72) Erfinder: Münz, Ulrich, 81673 München (DE)

(56) Entgegenhaltungen:
- EP-A1- 2 299 555
- DE-A1-102013 211 840
- DE-A1-102013 221 750
- US-A1- 2008 177 425
- MAO X. ET AL.: "RESEARCHES ON COORDINATED CONTROL STRATEGY FOR INTER-AREA OSCILLATIONS IN AC/DC HYBRID GRID WITH MULTI-INFEED HVDC", IEEE/PES TRANSMISSION & DISTRIBUTION CONFERENCE & EXPOSITION, 2005, Seiten 1-6, XP002767297,
- FANKHAUSER H R ET AL: "Advanced simulation techniques for the analysis of power system dynamics", IEEE COMPUTER APPLICATIONS IN POWER, IEEE INC. NEW YORK, US, Bd. 3, Nr. 4, 1. Oktober 1990 (1990-10-01) , Seiten 31-36, XP011419339, ISSN: 0895-0156, DOI: 10.1109/67.60751
- KAMWA I ET AL: "Low-Order Black-Box Models for Control System Design in Large Power Systems", IEEE TRANSACTIONS ON POWER SYSTEMS, IEEE SERVICE CENTER, PISCATAWAY, NJ, US, Bd. 11, Nr. 1, 1. Februar 1996 (1996-02-01), Seiten 303-311, XP011050206, ISSN: 0885-8950
- HARBANS NAKRA: "REAL-TIME SIMULATOR FOR POWER SYSTEM DYNAMICS STUDIES", IEEE TRANSACTIONS ON POWER SYSTEMS, IEEE SERVICE CENTER, PISCATAWAY, NJ, US, Bd. 10, Nr. 2, 1. Mai 1995 (1995-05-01), Seiten 1063-1070, XP000544100, ISSN: 0885-8950, DOI: 10.1109/59.387952
- XIAO-MING MAO: "DECENTRALIZED COORDINATED CONTROL OF MULTI-INFEED HVDC SYSTEM FOR DAMPING INTER-AREA OSCILLATION", INTERNATIONAL JOURNAL OF POWER AND ENERGY SYSTEMS, Bd. 29, Nr. 3, 1. Januar 2009 (2009-01-01) , Seiten 1-5, XP055340714, ISSN: 1710-2243, DOI: 10.2316/Journal.203.2009.3.203-4344

## Beschreibung

Zeitgemäße Stromnetze umfassen in der Regel eine Vielzahl von Netzkomponenten, wie z.B. Stromgeneratoren, Verbraucherlasten, Stromleitungen, Steuereinrichtungen, Kraftwerke, Windkraftanlagen, Photovoltaikanlagen und/oder andere konventionelle oder erneuerbare Energiequellen sowie Steuerkomponenten wie regelbare Transformatoren und sogenannte FACTS (Flexible AC Transmission Systems). Die Stromnetze können hierbei z.B. Stromversorgungsnetze, Übertragungsnetze, Verteilnetze oder Einspeisenetze sein, die insbesondere als Wechselstromnetze oder als Gleichstromnetze, z.B. als sogenannte HVDC-Systeme (HVCD: High Voltage Direct Current) ausgestaltet sein können.

Die Steuerung eines komplexen Stromnetzes erfordert in der Regel ein geeignetes Steuer- und Schutzsystem, das das Stromnetz insbesondere in kritischen oder unvorhergesehenen Situationen stabilisiert. Ein solches Steuer- und Schutzsystem wird häufig auch als CPS (Control and Protection System) bezeichnet. Ein CPS dient jeweils als Steuersystem für normale Betriebszustände des Stromnetzes sowie als Schutzsystem für anomale oder kritische Betriebszustände.

Insbesondere in komplexen Stromnetzen mit einer Vielzahl von Netzkomponenten treten häufig netzkomponentenübergreifende Schwingungen von wichtigen Betriebsgrößen wie z.B. Strom-, Spannung, Leistung, Lastfluss und/oder Phase auf. Derartige Schwingungen werden häufig auch als Power Oscillations (PO) bezeichnet. Sie treten z.B. dann auf, wenn ein großer Stromgenerator, wie beispielsweise eine Windfarm vom Stromnetz getrennt wird. In einem solchen Fall ist der dadurch bedingte Leistungsverlust durch zusätzliche Stromerzeugung anderer Generatoren des Stromnetzes zu kompensieren. Der Übergang der Stromgenerierung von der Windfarm zu einem oder mehreren kompensierenden Generatoren weist in der Regel ein sehr komplexes dynamisches Übergangsverhalten auf, wobei die Komplexität insbesondere durch eine Vielzahl von netzkomponenteninternen Regelungsschleifen der beteiligten Netzkomponenten bedingt ist. Der Übergang kann insbesondere zu erheblichen Oszillationen zwischen verschiedenen Generatoren führen, die zu einem Ausfall des Stromnetzes führen können, falls nicht rechtzeitig geeignete Gegenmaßnahmen eingeleitet werden.

Zur Dämpfung derartiger Oszillationen werden häufig sogenannte Pendeldämpfungsgeräte verwendet, die mit Synchrongeneratoren konventioneller Kraftwerke gekoppelt sind. Die Pendeldämpfungsgeräte werden häufig auch als PSS (Power System Stabilizers) bezeichnet. Darüber hinaus werden zur Dämpfung von Oszillationen auch andere Dämpfungseinrichtungen, wie z.B. sogenannte POD (Power Oscillations Dampers) bei HVDC Stationen verwendet. In der Regel werden PSS und POD manuell für einen vorgegebenen Satz von Testszenarien konfiguriert. In einem durch derartige Testszenarien abgedeckten Betriebsbereich des Stromnetzes kann auf diese Weise in der Regel eine akzeptable Schwingungsdämpfung erzielt werden. Sobald jedoch im laufenden Betrieb des Stromnetzes ein unvorhergesehener oder durch die Testszenarien nicht abgedeckter Betriebszustand kurzfristig auftritt, kann die Dämpfungseffizienz erheblich nachlassen und so eine kritische Situation entstehen.

Die Publikationen "Researches on Coordinated Control Strategy for inter-area Oscillations in AC/DC Hybrid Grid with multiinfeed HVDC" von X. Mao et al. in "IEEE/PES Transmission & distribution Conference & Expositions", 2005 sowie "Advanced Simulation Techniques for the Analysis of Power System Dynamics" von H. R. Fankhauser et al. in Band 3, Nr. 4 der "IEEE Computer Applications in Power", IEEE Inc., New York, 1990 offenbaren Simulationstechniken mit deren Hilfe Oszillationen in Stromnetzen gedämpft werden können.

Weitere Verfahren zur Dämpfung von Oszillationen in Stromversorgungsnetzen sind aus den Druckschriften EP 2299555 A1 sowie US 2008/177425A1 bekannt.

Es ist Aufgabe der vorliegenden Erfindung ein Verfahren, eine Steuereinrichtung, ein Computerprogrammprodukt sowie ein computerlesbares Speichermedium zum Steuern eines Stromnetzes anzugeben, die eine effizientere Steuerung und Stabilisierung des Stromnetzes erlauben.

Gelöst wird diese Aufgabe durch ein Verfahren mit den Merkmalen des Patentanspruchs 1, durch eine Steuereinrichtung mit den Merkmalen des Patentanspruchs 11, durch ein Computerprogrammprodukt mit den Merkmalen des Patentanspruchs 12 sowie durch ein computerlesbares Speichermedium mit den Merkmalen des Patentanspruchs 13.

Erfindungsgemäß werden zum Steuern eines Stromnetzes mit mehreren Netzkomponenten physikalische Betriebsdaten der Netzkomponenten sensorisch erfasst und anhand der erfassten physikalischen Betriebsdaten ein aktueller Betriebszustand des Stromnetzes mittels eines netzkomponentenübergreifenden Netzmodells des Stromnetzes ermittelt. Eine erste Netzkomponente wird mittels eines durch Steuerparameter einstellbaren Reglers mit netzkomponenteninternem Regelkreis abhängig von einem Steuersignal geregelt. Zum Ermitteln einer dynamischen Reaktion der ersten Netzkomponente auf das Steuersignal in Abhängigkeit von den Steuerparametern wird ein erstes Komponentenmodell der ersten Netzkomponente eingelesen. Im Rahmen eines Optimierungsverfahrens werden dann die Steuerparameter variiert, wobei mittels des ersten Komponentenmodells sowie des Netzmodells abhängig vom aktuellen Betriebszustand und den variierten Steuerparametern die dynamische Reaktion ermittelt wird und die Steuerparameter derart ermittelt werden, dass die dynamische Reaktion ein vorgegebenes Kriterium erfüllt. Der Regler wird dann durch die so ermittelten Steuerparameter eingestellt. Erfindungsgemäß wird eine Vielzahl von dynamischen Reaktionen einer Netzkomponente auf Steuersignale sensorisch erfasst, und ein weiteres Komponentenmodell der Netzkomponente wird derart generiert und eingestellt, dass es die Vielzahl von dynamischen Reaktionen im Wesentlichen reproduziert.

Ein wesentlicher Vorteil der Erfindung ist darin zu sehen, dass interne, z.B. zur Dämpfung von Oszillationen vorgesehene Regler von Netzkomponenten im laufenden Betrieb in vorteilhafter bzw. nahezu optimaler Weise auf einen jeweiligen aktuellen, netzkomponentenübergreifend ermittelten Betriebszustand des Stromnetzes eingestellt werden können. Auf diese Weise kann in vielen spezifischen Betriebszuständen ein besseres oder zumindest besser an den aktuellen Betriebszustand angepasstes Regelungsverhalten erzielt werden.

Vorteilhafte Ausführungsformen und Weiterbildungen der Erfindung sind in den abhängigen Ansprüchen angegeben.

Gemäß einer vorteilhaften Ausführungsform der Erfindung können die Steuerparameter derart ermittelt werden, dass die dynamische Reaktion der ersten Netzkomponente das Stromnetz stabilisiert. Auf diese Weise können unerwünschte Oszillationen, z.B. Strom-, Spannungs-, Leistungs-, Lastfluss- und/oder Phasenoszillationen im Stromnetz aktiv und angepasst an den aktuellen Betriebszustand gedämpft werden.

Weiterhin kann eine zweite Netzkomponente des Stromnetzes abhängig von einem zweiten Steuersignal geregelt werden. Ein zweites Komponentenmodell der zweiten Netzkomponente kann eingelesen werden, um eine zweite dynamische Reaktion der zweiten Netzkomponente auf das zweite Steuersignal zu ermitteln. Die dynamische Reaktion in Verfahrensschritt e) kann dann mittels des zweiten Komponentenmodells ermittelt werden. Auf diese Weise kann ein Einfluss von einer oder mehreren zweiten dynamischen Reaktionen einer oder mehrerer zweiter Netzkomponenten auf die dynamische Reaktion der ersten Netzkomponente berücksichtigt werden, um so z.B. die Modellierungsgenauigkeit und damit die Optimierung der Steuerparameter zu verbessern.

Die Einstellung eines weiteren Komponentenmodells einer Netzkomponente zum Reproduzieren der Vielzahl von dynamischen Reaktionen kann beispielsweise durch sogenanntes Fitten von Modellparametern dieses Komponentenmodells erfolgen. Auf diese Weise kann eine Modellierungsgenauigkeit des Komponentenmodells in der Regel erheblich verbessert werden. Vorzugsweise kann die Einstellung des Komponentenmodells abhängig von den erfassten Betriebsdaten und/oder abhängig vom aktuellen Betriebszustand fortlaufend erfolgen. Insbesondere können damit die dynamischen Reaktionen der ersten und/oder der zweiten Netzkomponente erfasst werden und abhängig davon das erste und/oder zweite Komponentenmodell eingestellt werden.

Nach einer weiteren Ausführungsform der Erfindung kann ein Komponentenmodell, z.B. das erste und/oder zweite Komponentenmodell Strukturdaten über eine netzkomponenteninterne Struktur einer Netzkomponente, z.B. der ersten und/oder der zweiten Netzkomponente umfassen. Ein Black-Box-Komponentenmodell der Netzkomponente kann eingelesen werden, um Ausgangssignale der Netzkomponente abhängig von Eingangssignalen zu ermitteln. Das Komponentenmodell kann dann derart eingestellt werden, dass es durch das Black-Box-Komponentenmodell ermittelte Ausgangssignale unter Berücksichtigung der Strukturdaten im Wesentlichen reproduziert. Dies kann beispielsweise durch Fitten von Modellparametern des Komponentenmodells erfolgen. Auf diese Weise kann anhand eines verfügbaren Black-Box-Komponentenmodells z.B. ein sogenanntes White-Box-Komponentenmodell mit hoher Modellierungsgenauigkeit generiert werden. Vorzugsweise kann die Einstellung des Komponentenmodells abhängig von den erfassten Betriebsdaten und/oder abhängig vom aktuellen Betriebszustand fortlaufend erfolgen. Alternativ oder zusätzlich zum Black-Box-Komponentenmodell kann ein sogenanntes Grey-Box-Komponentenmodell verwendet werden.

Gemäß einer weiteren vorteilhaften Ausführungsform der Erfindung kann aus dem ersten Komponentenmodell und/oder dem Netzmodell ein um den aktuellen Betriebszustand linearisiertes erstes Komponentenmodell und/oder ein um den aktuellen Betriebszustand linearisiertes Netzmodell generiert werden. Ein nichtlineares Komponentenmodell und/oder Netzmodell kann auf diese Weise in der Regel erheblich vereinfacht werden. Insbesondere erfordert eine Berechnung, Analyse und Optimierung von dynamischen Reaktionen mittels eines linearisierten Modells einen erheblich geringeren Aufwand.

Insbesondere können mittels des linearisierten ersten Komponentenmodells und/oder des linearisierten Netzmodells dynamische Schwingungsmoden des Stromnetzes ermittelt werden. Die Steuerparameter können dann derart ermittelt werden, dass der Regler den ermittelten Schwingungsmoden gegensteuert. Auf diese Weise können unerwünschte Oszillationen des Stromnetzes aktiv und adaptiv gedämpft werden.

Nach einer vorteilhaften Weiterbildung der Erfindung kann in Verfahrensschritt e) das linearisierte erste Komponentenmodell als erstes Komponentenmodell und/oder das linearisierte Netzmodell als Netzmodell zur Ermittlung der Steuerparameter verwendet werden. Abhängig von den so ermittelten Steuerparametern und vom aktuellen Betriebszustand kann dann mittels eines detaillierten Simulationsmodells eine detaillierte dynamische Reaktion der ersten Netzkomponente ermittelt werden. Sofern auch die detaillierte dynamische Reaktion das vorgegebene Kriterium erfüllt, kann der Regler durch die ermittelten Steuerparameter eingestellt werden. Falls dagegen die detaillierte dynamische Reaktion das vorgegebene Kriterium nicht erfüllt, kann die Einstellung des Reglers unterdrückt werden und/oder ein erneuter Optimierungszyklus, vorzugsweise unter Berücksichtigung der detaillierten dynamischen Reaktion ausgeführt werden. Auf diese Weise kann eine vereinfachte Dämpfungsanalyse und/oder Optimierung der Steuerparameter anhand der linearisierten Modelle durchgeführt werden und erst das Optierungsergebnis anhand des detaillierten, ggf. nichtlinearen Simulationsmodells genauer überprüft werden.

Ein Ausführungsbeispiel der Erfindung wird nachfolgend anhand der Zeichnung näher erläutert. Dabei zeigen jeweils in schematischer Darstellung
- Figur 1: ein Stromnetz mit mehreren Netzkomponenten und
- Figur 2: eine erfindungsgemäße Steuereinrichtung beim Einstellen einer ersten Netzkomponente.

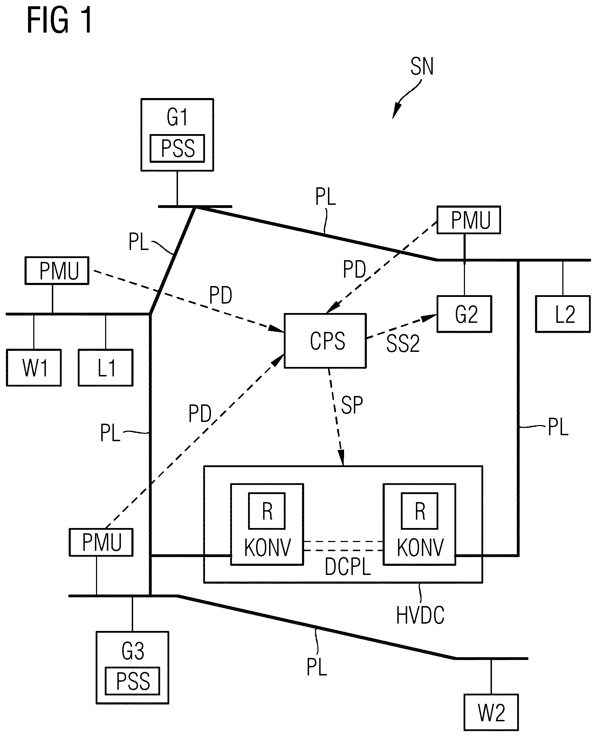

Figur 1 zeigt ein Stromnetz SN, z.B. ein Stromversorgungsnetz, Übertragungsnetz, Verteilnetz und/oder Einspeisenetz in schematischer Darstellung. Das Stromnetz SN kann eine Vielzahl von Netzkomponenten, wie z.B. Stromgeneratoren, Verbraucherlasten, Stromleitungen, Steuereinrichtungen, Kraftwerke, Windkraftanlagen, Photovoltaikanlagen und/oder andere konventionelle oder erneuerbare Energiequellen enthalten. Die Netzkomponenten können insbesondere Gleichstromkomponenten, z.B. HVDC-Komponenten (HVDC: High Voltage Direct Current) oder Wechselstromkomponenten, wie z.B. FACTS-Komponenten (FACTS: Flexible AC Transmission System) umfassen.

Im vorliegenden Ausführungsbeispiel enthält das Stromnetz SN als Netzkomponenten konventionelle Generatoren G1, G2 und G3, z.B. Gas- oder Kernkraftwerke, erneuerbare Energiequellen W1 und W2, z.B. Windkraftanlagen oder Photovoltaikanlagen, Verbraucherlasten L1 und L2, ein Hochspannungs-Gleichstrom-Übertragungssystem HVDC sowie Stromleitungen PL, die die vorgenannten Netzkomponenten verbinden bzw. vernetzen. Die Stromleitungen PL, die in Figur 1 durch verdickte Linien veranschaulicht werden, können jeweils für Wechselstrom oder Gleichstrom ausgelegt sein.

Das Hochspannungs-Gleichstrom-Übertragungssystem HVDC verfügt über eine Hochspannungsleitung DCPL, die an beiden Enden über Konverterstationen KONV an das restliche Stromnetz gekoppelt ist. Die Konverterstationen KONV weisen jeweils einen internen Regler R auf. Im vorliegenden Ausführungsbeispiel sind die Regler R als Oszillationsdämpfer, z.B. als sogenannte POD (Power Oscillations Dampers) implementiert, die zur Dämpfung von Oszillationen im Stromnetz SN, z.B. von Strom-, Spannungs-, Leistungs-, Lastfluss- und/oder Phasenoszillationen dienen. Derartige Oszillationen werden häufig auch als Power Oscillations bezeichnet.

Die Generatoren G1 und G3 verfügen jeweils über eine interne Stabilisierungseinrichtung PSS, z.B. ein sogenanntes Pendeldämpfungsgerät zur Dämpfung von Generatoroszillationen. Eine solche Stabilisierungseinrichtung PSS wird häufig auch als Power System Stabilizer (PSS) bezeichnet.

Weiterhin sind an verschiedenen Stellen des Stromnetzes SN physikalische Sensoren PMU angeordnet zur Erfassung von physikalischen Betriebsdaten PD von Netzkomponenten des Stromnetzes SN. Als derartige Sensoren PMU können insbesondere sogenannte zeitsynchronisierte Zeigermessgeräte verwendet werden, die häufig auch als Phasor Measurement Unit (PMU) bezeichnet werden. Ein solches zeitsynchronisiertes Zeigermessgerät liefert insbesondere Messwerte für Spannung, Strom und Phasenwinkel, die deshalb häufig auch als PMU-Messwerte bezeichnet werden. Als physikalische Betriebsdaten PD können lokale und/oder netzkomponentenübergreifende Betriebsdaten erfasst werden, wie z.B. physikalische, regelungstechnische und/oder bauartbedingte Größen wie Leistung, Wirkleistung, Blindleistung, Frequenz und/oder PMU-Messwerte. Insbesondere können auch diskrete Parameter, die z.B. eine Unterbrechung, einen Kurzschluss oder eine Zuschaltung von Übertragungsleitungen angeben, als physikalische Betriebsdaten PD erfasst werden. Die physikalischen Betriebsdaten PD können insbesondere bei Übertragungsleitungen, Kraftwerken, Stromgeneratoren und/oder Lasten erfasst werden.

Das Stromnetz SN verfügt weiterhin über eine Steuereinrichtung CPS, z.B. ein sogenanntes Control and Protection System, zum Steuern des Stromnetzes SN. Die Steuereinrichtung CPS empfängt fortlaufend die physikalischen Betriebsdaten PD von den Sensoren PMU. Anhand der physikalischen Betriebsdaten PD ermittelt die Steuereinrichtung CPS fortlaufend einen aktuellen Betriebszustand des Stromnetzes SN und berechnet abhängig davon insbesondere optimierte Steuerparameter SP zum Einstellen einer ersten Netzkomponente sowie gegebenenfalls zweite Steuersignale SS2 zum Steuern einer zweiten Netzkomponente. Im vorliegenden Ausführungsbeispiel ist die erste Netzkomponente das Hochspannungs-Gleichstrom-Übertragungssystem HVDC und die zweite Netzkomponente der Generator G2. Dementsprechend werden die berechneten Steuerparameter SP durch die Steuereinrichtung CPS zum Übertragungssystem HVDC und gegebenenfalls die berechneten zweiten Steuersignale SS2 zum Generator G2 übermittelt.

Im vorliegenden Ausführungsbeispiel sind die internen Regler R der ersten Netzkomponente HVDC durch die Steuereinrichtung CPS mittels der Steuerparameter SP von außen einstellbar. Das Übertragungssystem HVDC als erste Netzkomponente steht im vorliegenden Ausführungsbeispiel stellvertretend für vorzugsweise alle Netzkomponenten, bei denen ein oder mehrere interne Regler durch die Steuereinrichtung CPS einstellbar sind.

Weiter sei für das vorliegende Ausführungsbeispiel angenommen, dass die zweite Netzkomponente, hier der Generator G2, keine für die Dynamik des Stromnetzes SN maßgeblichen internen Regler aufweist, die durch die Steuereinrichtung CPS konfigurierbar oder einstellbar sind. Der Generator G2 ist mithin durch die Steuereinrichtung CPS nur von außen steuerbar und erlaubt keine interne Feineinstellung, zumindest nicht durch die Steuereinrichtung CPS. Der Generator G2 steht im vorliegenden Ausführungsbeispiel stellvertretend für vorzugsweise alle Netzkomponenten, bei denen interne Regler durch die Steuereinrichtung CPS im Allgemeinen nicht einstellbar sind.

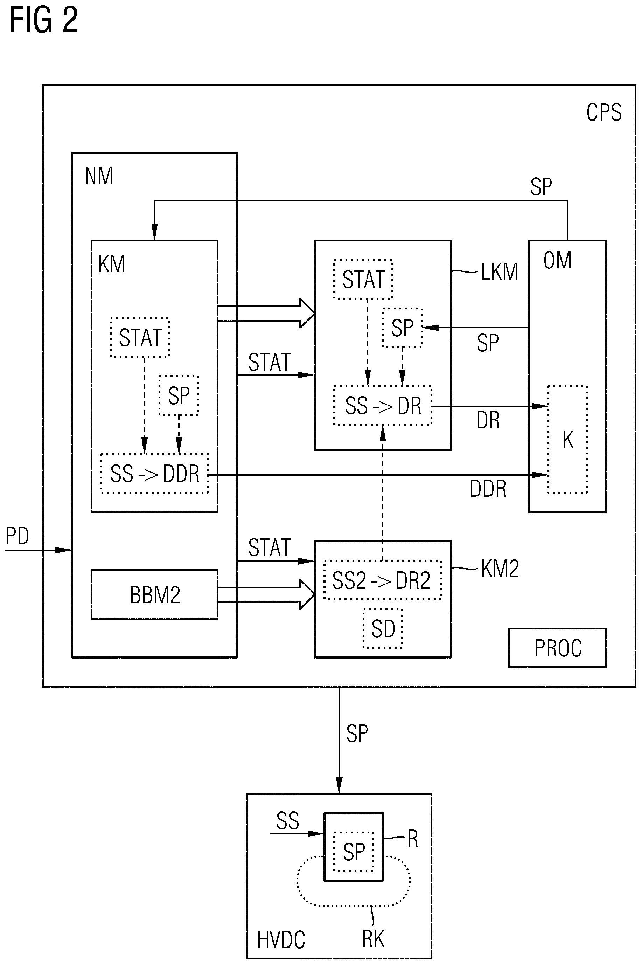

Figur 2 zeigt in schematischer Darstellung die erfindungsgemäße Steuereinrichtung CPS beim Einstellen der ersten Netzkomponente, d.h. des Übertragungssystems HVDC. In der ersten Netzkomponente HVDC ist in Figur 2 nur einer der Regler R stellvertretend dargestellt. Dieser interne Regler R steuert einen netzkomponenteninternen Regelkreis RK zum Regeln der ersten Netzkomponente HVDC. Der Regelkreis RK regelt hierbei netzkomponenteninterne Betriebsgrößen der ersten Netzkomponente HVDC.

Der Regler R ist durch die Steuerparameter SP von außen durch die Steuereinrichtung CPS einstellbar und durch ein Steuersignal SS steuerbar. Die von außen einstellbaren Steuerparameter SP bestimmen insbesondere das dynamische Regelungsverhalten des Reglers R. Das Steuersignal SS dient zum Steuern der ersten Netzkomponente HVDC mittels des Reglers R. Das Steuersignal SS kann von netzkomponentenexternen Steuerelementen, z.B. der Steuereinrichtung CPS oder von netzkomponenteninternen Steuerelementen stammen, die die erste Netzkomponente HVDC mittels des Reglers R abhängig von einem aktuellen Betriebszustand des Stromnetzes SN steuern.

Die Steuereinrichtung CPS umfasst zum Ausführen aller Verfahrensschritte der Steuereinrichtung CPS einen oder mehrere Prozessoren PROC. Weiterhin verfügt die Steuereinrichtung CPS über ein netzkomponentenübergreifendes Netzmodell NM des Stromnetzes SN. Das Netzmodell NM modelliert und/oder simuliert ein dynamisches Verhalten des Stromnetzes SN sowie seiner Netzkomponenten, insbesondere eine dynamische Verknüpfung von Energieerzeugern und Lasten im Stromnetz SN. Das dynamische Verhalten umfasst hierbei insbesondere eine physikalische Dynamik wie z.B. einen Zeitverlauf von physikalischen Betriebsdaten, z.B. einen Spannungsverlauf, Stromverlauf, Wirkleistungsverlauf, Blindleistungsverlauf, Frequenzverlauf und/oder Phasenverlauf an vorgebbaren Stellen des Stromnetzes SN. Das Netzmodell NM erlaubt insbesondere eine Berechnung eines aktuellen Betriebszustandes STAT des Stromnetzes SN anhand der physikalischen Betriebsdaten PD. Das dynamische Verhalten wird dann abhängig vom aktuellen Betriebszustand STAT ermittelt.

Der aktuelle Betriebszustand STAT wird vorzugsweise durch eine Datenstruktur repräsentiert, die aktuelle physikalische und/oder regelungstechnische Zustände und/oder Eigenschaften des Stromnetzes und/oder seiner Komponenten angibt. Dies können z.B. Systemzustände, Systemparameter, Betriebsdaten, Betriebsbedingungen, Nebenbedingungen und/oder Messgrößen an vorgebbaren Stellen des Stromnetzes SN sein.

Das Netzmodell NM beinhaltet ein erstes Komponentenmodell KM der ersten Netzkomponente HDVC. Das erste Komponentenmodell KM modelliert und/oder simuliert in detaillierter Weise ein internes dynamisches Verhalten der ersten Netzkomponente HDVC und insbesondere des internen Reglers R. Zu diesem Zweck umfasst das erste Komponentenmodell KM insbesondere Information über die von außen einstellbaren Steuerparameter SP sowie über die davon abhängige physikalische Dynamik des Regelkreises RK. Das erste Komponentenmodell KM erlaubt insbesondere eine Berechnung einer detaillierten dynamischen Reaktion DDR der ersten Netzkomponente HVDC auf das Steuersignal SS, abhängig vom aktuellen Betriebszustand STAT und den Steuerparametern SP.

Als dynamische Reaktion sei in diesem Zusammenhang ein dynamisches Verhalten einer Netzkomponente oder des Stromnetzes SN bei Steuerung und/oder Anregung durch ein Steuersignal verstanden. Das dynamische Verhalten kann insbesondere Schwingungsmoden sowie deren jeweilige Dämpfung umfassen.

Das Netzmodell NM beinhaltet weiterhin ein Black-Box-Komponentenmodell BBM2 des zweiten Netzkomponente G2. Das Black-Box-Komponentenmodell BBM2 erlaubt eine Berechnung von Ausgangssignalen der zweiten Netzkomponente G2 abhängig von deren Eingangssignalen, hier beispielhaft den zweiten Steuersignalen SS2. Vorzugsweise ist für jede zweite Netzkomponente des Stromnetzes SN ein netzkomponentenspezifisches Black-Box-Komponentenmodell im Netzmodell NM vorgesehen.

Mittels des Netzmodells NM ermittelt die Steuereinrichtung CPS anhand der empfangenen Betriebsdaten PD fortlaufend den aktuellen Betriebszustand STAT.

Aus dem Black-Box-Komponentenmodell BBM2 wird ein zweites Komponentenmodell KM2 der zweiten Netzkomponente G2, wie in Figur 2 durch einen flächenhaften Pfeil angedeutet, generiert. Das zweite Komponentenmodell KM2 wird dabei abhängig vom aktuell ermittelten Betriebszustand STAT so eingestellt, dass es die vom Black-Box-Komponentenmodell BBM2 modellierte Abhängigkeit der Ausgangssignale von den Eingangssignalen im Wesentlichen reproduziert. Zur genaueren Einstellung des zweiten Komponentenmodells KM2 verfügt dieses vorzugsweise über interne Strukturdaten SD über eine interne Struktur der zweiten Netzkomponente G2, wofür häufig bereits fundierte Annahmen über die interne Struktur genügen. Alternativ oder zusätzlich kann das zweite Komponentenmodell KM2 auch anhand einer Vielzahl von sensorisch erfassten dynamischen Reaktionen von Netzkomponenten derart eingestellt werden, dass es diese Vielzahl von dynamischen Reaktionen im Wesentlichen reproduziert.

Das zweite Komponentenmodell KM2 modelliert und/oder simuliert ein dynamisches Verhalten der zweiten Netzkomponente G2. Auf diese Weise werden durch das zweite Komponentenmodell KM2 zweite dynamische Reaktionen DR2 der zweiten Netzkomponente G2 auf die zweiten Steuersignale SS2, abhängig vom aktuellen Betriebszustand STAT ermittelt. Vorzugsweise wird für jede zweite Netzkomponente des Stromnetzes SN ein netzkomponentenspezifisches zweites Komponentenmodell anhand des Netzmodells NM generiert.

Weiterhin wird aus dem ersten Komponentenmodell KM, wie in Figur 2 durch einen flächenhaften Pfeil angedeutet, ein linearisiertes erstes Komponentenmodell LKM der ersten Netzkomponente HVDC generiert. Zu diesem Zweck wird das erste Komponentenmodell um den aktuellen Betriebszustand STAT linearisiert oder entwickelt. Das linearisierte erste Komponentenmodell LKM modelliert und/oder simuliert ein lineares dynamisches Verhalten der ersten Netzkomponente HVDC und insbesondere des internen Reglers R sowie dessen Regelkreises RK in Abhängigkeit der Steuerparameter SP. Das linearisierte erste Komponentenmodell LKM erlaubt eine besonders einfache Berechnung einer dynamischen Reaktion DR der ersten Netzkomponente HVDC auf das Steuersignal SS abhängig vom aktuellen Betriebszustand STAT und den Steuerparametern SP.

Vorzugsweise kann das gesamte Netzmodell NM linearisiert werden, wobei das erste Komponentenmodell KM, das Black-Box-Komponentenmodell BBM2 und/oder das zweite Komponentenmodell KM2 als Teile des Netzmodells NM linearisiert werden. Insbesondere kann das linearisierte erste Komponentenmodell LKM oder das linearisierte Netzmodell zur Ermittlung dynamischer Schwingungsmoden des Stromnetzes SN und damit zu dessen Dämpfungsanalyse verwendet werden.

Die Linearisierung und/oder die Generierung der Modelle NM, KM, BBM2, LKM und/oder KM2 erfolgt vorzugsweise fortlaufend und/oder adaptiv anhand von fortlaufend erfassten physikalischen Betriebsdaten PD bzw. des aktuellen Betriebszustandes STAT. Vorteilhafterweise kann die Linearisierung und/oder Generierung durch eine jeweilige Änderung des aktuellen Betriebszustandes STAT veranlasst werden.

Die Modelle NM, KM, BBM2, LKM und/oder KM2 werden vorzugsweise in einer Datenbank oder einem anderen Speicher der Steuereinrichtung CPS gespeichert und von dort eingelesen. Die obigen Modelle umfassen jeweils eine Datenstruktur, vorzugsweise im Sinne der objektorientierten Programmierung mit einer Vielzahl von Modellparametern, die physikalische und/oder regelungstechnische Eigenschaften der zu simulierenden Netzkomponenten und deren dynamische und/oder statische Abhängigkeiten voneinander modellieren. Derartige Eigenschaften sind z.B. Systemeigenschaften, Systemparameter, Betriebseigenschaften, Betriebsdaten, Betriebsbedingungen, Nebenbedingungen und/oder Messgrößen.

Die Steuereinrichtung CPS umfasst weiterhin ein Optimierungsmodul OM zum Variieren und Optimieren der Steuerparameter SP abhängig vom aktuellen Betriebszustand STAT. Das Optimierungsmodul OM veranlasst zum Einen die Berechnung der zweiten dynamischen Reaktionen DR2 auf die zweiten Steuersignale SS2 abhängig vom aktuellen Betriebszustand STAT anhand des zweiten Komponentenmodells KM2 oder des Netzmodells NM. Zum Anderen variiert das Optimierungsmodul OM die Steuerparameter SP und übermittelt die variierten Steuerparameter SP zum linearisierten ersten Komponentenmodell LKM oder - anders ausgedrückt - parametrisiert das linearisierte erste Komponentenmodell LKM mit diesen variierten Steuerparametern SP. Für die jeweils variierten Steuerparameter SP wird die dynamische Reaktion DR der ersten Netzkomponente HVDC auf das Steuersignal SS mittels des linearisierten ersten Komponentenmodells LKM abhängig vom aktuellen Betriebszustand STAT und unter Berücksichtigung der zweiten dynamischen Reaktionen DR2 berechnet.

Die Berücksichtigung der zweiten dynamischen Reaktionen DR2 ist in Figur 2 durch einen punktierten Pfeil angedeutet.

Im vorliegenden Ausführungsbeispiel umfasst die dynamische Reaktion DR insbesondere die dynamischen Schwingungsmoden des Stromnetzes SN sowie deren jeweilige Dämpfung. Die dynamische Reaktion DR wird vom linearisierten ersten Komponentenmodell LKM zum Optimierungsmodul OM übermittelt.

Im Rahmen des weiteren Optimierungsverfahrens werden die Steuerparameter SP durch das Optimierungsmodul OM so optimiert, dass die dynamische Reaktion DR für diese Steuerparameter SP ein vorgegebenes Kriterium K erfüllt. Im vorliegenden Ausführungsbeispiel wird als Kriterium K vorgegeben, dass die Schwingungsmoden bzw. Oszillationen des Stromnetzes SN möglichst weitgehend gedämpft werden.

Die so optimierten Steuerparameter SP werden vom Optimierungsmodul OM zum ersten Komponentenmodell KM übermittelt oder - mit anderen Worten - das erste Komponentenmodell KM wird durch die optimierten Steuerparameter SP parametrisiert. Mittels des so parametrisierten ersten Komponentenmodells KM wird dann abhängig vom aktuellen Betriebszustand STAT und den optimierten Steuerparametern SP die detaillierte dynamische Reaktion DDR auf das Steuersignal SS ermittelt. Die detaillierte dynamische Reaktion DR wird anschließend vom ersten Komponentenmodell KM zum Optimierungsmodul OM übermittelt und dort hinsichtlich des vorgegebenen Kriteriums K geprüft.

Sofern die detaillierte dynamische Reaktion DDR das Kriterium K erfüllt, werden die optimierten Steuerparameter SP zur ersten Netzkomponente HVDC übermittelt, um deren Regler R damit einzustellen. Andernfalls wird die Übermittlung der optimierten Steuerparameter SP zur ersten Netzkomponente HVDC unterdrückt und/oder ein neuer Optimierungszyklus, vorzugsweise unter Berücksichtigung der detaillierten dynamischen Reaktion DDR durchgeführt.

Die obige Ermittlung, Optimierung und Prüfung der Steuerparameter wird im laufenden Betrieb, d.h. online und in Echtzeit durchgeführt.

Im Folgenden wird ein typischer Anwendungskontext der Erfindung beschrieben, bei dem mehrere Netzkomponenten eines Stromnetzes zur Entstehung und Dämpfung unerwünschter Oszillationen beitragen, aber nur eine oder wenige dieser Netzkomponenten im laufenden Betrieb des Stromnetzes von einem Betreiber eingestellt oder feinjustiert werden können. Die einstellbaren Netzkomponenten entsprechen hierbei den ersten Netzkomponenten und die nicht einstellbaren Netzkomponenten den zweiten Netzkomponenten des vorstehenden Ausführungsbeispiels.

Typischerweise können vom Betreiber nur seine eigenen Netzkomponenten im laufenden Betrieb eingestellt und feinjustiert werden. Für die eigenen Netzkomponenten, d.h. die ersten Netzkomponenten, verfügt der Betreiber in der Regel über ein detailliertes Komponentenmodell, ein sogenanntes White-Box-Modell, das dem ersten Komponentenmodell KM im vorstehenden Ausführungsbeispiel entspricht. Für die zweiten Netzkomponenten stehen dem Betreiber in der Regel keine White-Box-Modelle zur Verfügung, sondern höchstens Black-Box-Modelle. Aus diesem Grund werden zunächst anhand der verfügbaren Black-Box-Modelle und/oder anhand von sensorisch erfassten Betriebsdaten des Stromnetzes Komponentenmodelle der zweiten Netzkomponenten mit ausreichender Modellierungsqualität generiert. Diese generierten Komponentenmodelle entsprechen dem zweiten Komponentenmodell KM2 des Ausführungsbeispiels. Die Generierung erfolgt fortlaufend.

Weiterhin werden physikalische Betriebsdaten des Stromnetzes aggregiert und daraus der aktuelle Betriebszustand des Stromnetzes ermittelt.

Darüber hinaus werden das White-Box-Modell sowie die generierten Komponentenmodelle um den ermittelten Betriebszustand linearisiert bzw. entwickelt. Mittels dieser linearisierten Modelle werden die Schwingungs-Eigenmoden der linear modellierten physikalischen Dynamik der Netzkomponenten und/oder des Stromnetzes als Ganzem ermittelt. Anhand der ermittelten Schwingungs-Eigenmoden wird online und in Echtzeit eine Dämpfungsanalyse für die Oszillationen des Stromnetzes durchgeführt. Zu diesem Zweck ist eine Vielzahl von Standardverfahren verfügbar.

Mittels des White-Box-Modells und der linearisierten Komponentenmodelle werden dann Steuerparameter für die einstellbaren Netzkomponenten ermittelt, die zu einer möglichst weitgehenden Dämpfung der unerwünschten Oszillationen führen. Für diese Optimierung kann beispielsweise ein Reglerentwurfsverfahren für sogenannte SOF-Modelle (SOF: Static Output Feedback) verwendet werden.

Die optimierten Steuerparameter werden anschließend mittels eines detaillierten Simulationsmodells, das im vorstehenden Ausführungsbeispiel dem ersten Komponentenmodell KM entspricht, dahingehend geprüft, ob das vorgegebene Kriterium auch bei detaillierter Simulation eingehalten wird. Bei positivem Prüfungsergebnis werden die optimierten Steuerparameter zur Einstellung der ersten Netzkomponenten verwendet. Andernfalls wird die Einstellung der ersten Netzkomponenten unterdrückt, ein vorgegebener Standardwert verwendet oder ein erneuter Optimierungszyklus, vorzugsweise unter Berücksichtigung der detaillierten Simulationsergebnisse ausgeführt.

## Patentansprüche

1. Verfahren zum Steuern eines Stromnetzes (SN) mit mehreren Netzkomponenten, wobei
a) physikalische Betriebsdaten (PD) der Netzkomponenten sensorisch erfasst werden,
b) anhand der erfassten physikalischen Betriebsdaten (PD) ein aktueller Betriebszustand (STAT) des Stromnetzes (SN) mittels eines netzkomponentenübergreifenden Netzmodells (NM) des Stromnetzes (SN) ermittelt wird,
c) eine erste Netzkomponente (HVDC) mittels eines durch Steuerparameter (SP) einstellbaren Reglers (R) mit netzkomponenteninternem Regelkreis (RK) abhängig von einem Steuersignal (SS) geregelt wird,
d) ein erstes Komponentenmodell (KM, LKM) der ersten Netzkomponente (HVDC) eingelesen wird zum Ermitteln einer dynamischen Reaktion (DDR, DR) der ersten Netzkomponente (HVDC) auf das Steuersignal (SS) abhängig von den Steuerparametern (SP),
e) im Rahmen eines Optimierungsverfahrens die Steuerparameter (SP) variiert werden, wobei mittels des ersten Komponentenmodells (KM, LKM) sowie des Netzmodells (NM) abhängig vom aktuellen Betriebszustand (STAT) und den variierten Steuerparametern (SP) die dynamische Reaktion (DDR, DR) ermittelt wird und die Steuerparameter (SP) derart ermittelt werden, dass die dynamische Reaktion (DDR, DR) ein vorgegebenes Kriterium (K) erfüllt, und
f) der Regler (R) durch die so ermittelten Steuerparameter (SP) eingestellt wird,
**dadurch gekennzeichnet,**
**dass** eine Vielzahl von dynamischen Reaktionen einer Netzkomponente (G2, HVDC) auf Steuersignale sensorisch erfasst wird, und
**dass** ein weiteres Komponentenmodell (KM2, LKM) der Netzkomponente (G2, HVDC) generiert und derart eingestellt wird, dass es die Vielzahl von dynamischen Reaktionen reproduziert.

2. Verfahren nach Anspruch 1, **dadurch gekennzeichnet, dass** die Steuerparameter (SP) derart ermittelt werden, dass die dynamische Reaktion (DDR, DR) der ersten Netzkomponente (HVDC) das Stromnetz (SN) stabilisiert.

3. Verfahren nach einem der vorhergehenden Ansprüche, **dadurch gekennzeichnet,**
**dass** eine zweite Netzkomponente (G2) des Stromnetzes (SN) abhängig von einem zweiten Steuersignal (SS2) geregelt wird, dass ein zweites Komponentenmodell (KM2) der zweiten Netzkomponente (G2) eingelesen wird zum Ermitteln einer zweiten dynamischen Reaktion (DR2) der zweiten Netzkomponente (G2) auf das zweite Steuersignal (SS2), und
**dass** die dynamische Reaktion (DDR, DR) in Verfahrensschritt e) mittels des zweiten Komponentenmodells (KM2) ermittelt wird.

4. Verfahren nach einem der vorhergehenden Ansprüche, **dadurch gekennzeichnet,**
**dass** aus dem ersten Komponentenmodell (KM) und/oder dem Netzmodell (NM) ein um den aktuellen Betriebszustand (STAT) linearisiertes erstes Komponentenmodell (LKM) und/oder ein um den aktuellen Betriebszustand (STAT) linearisiertes Netzmodell generiert wird.

5. Verfahren nach Anspruch 4, **dadurch gekennzeichnet,**
**dass** mittels des linearisierten ersten Komponentenmodells (LKM) und/oder des linearisierten Netzmodells dynamische Schwingungsmoden des Stromnetzes (SN) ermittelt werden, und dass die Steuerparameter (SP) derart ermittelt werden, dass der Regler (R) den ermittelten Schwingungsmoden gegensteuert.

6. Verfahren nach Anspruch 4 oder 5, **dadurch gekennzeichnet,**
**dass** in Verfahrensschritt e) das linearisierte erste Komponentenmodell (LKM) als erstes Komponentenmodell und/oder das linearisierte Netzmodell als Netzmodell zur Ermittlung der Steuerparameter (SP) verwendet wird,
**dass** mittels eines detaillierten Simulationsmodells (KM, NM) abhängig vom aktuellen Betriebszustand (STAT) und den ermittelten Steuerparametern (SP) eine detaillierte dynamische Reaktion (DDR) der ersten Netzkomponente (HVDC) ermittelt wird, und
**dass** der Regler (R) durch die ermittelten Steuerparameter (SP) eingestellt wird, sofern die detaillierte dynamische Reaktion (DDR) das vorgegebene Kriterium (K) erfüllt.

7. Verfahren nach Anspruch 6, **dadurch gekennzeichnet,**
**dass** als detailliertes Simulationsmodell das erste Komponentenmodell (KM), das zweite Komponentenmodell (KM2), das Netzmodell (NM), ein nichtlineares Simulationsmodell und/oder ein Black-Box-Simulationsmodell verwendet wird.

8. Steuereinrichtung (CPS) zum Steuern eines Stromnetzes (SN) mit mehreren Netzkomponenten, eingerichtet zum Ausführen eines Verfahrens nach einem der vorhergehenden Ansprüche.

9. Computerprogrammprodukt eingerichtet zum Ausführen eines Verfahrens nach einem der Ansprüche 1 bis 7.

10. Computerlesbares Speichermedium mit einem Computerprogrammprodukt nach Anspruch 9.

## Claims

1. Method for controlling an electrical grid (SN) with several grid components, wherein
a) physical operating data (PD) of the grid components are recorded by means of sensors,
b) by way of the recorded physical operating data (PD), a current operating status (STAT) of the electrical grid (SN) is determined by way of a network model (NM) of the electrical grid (SN) which spans the grid components,
c) a first grid component (HVDC) is controlled as a function of a control signal (SS) by means of a regulator (R) with a grid-component-internal control circuit (RK) which is adjustable via control parameters (SP),
d) a first component model (KM, LKM) of the first grid component (HVDC) is imported to determine a dynamic reaction (DDR, DR) of the first grid component (HVDC) to the control signal (SS) depending on the control parameters (SP),
e) as part of an optimization procedure the control parameters (SP) are varied, wherein by means of the first component model (KM, LKM) as well as the network model (NM), depending on the current operating status (STAT) and the varied control parameters (SP) the dynamic reaction (DDR, DR) is determined and the control parameters (SP) are determined in such a way that the dynamic reaction (DDR, DR) fulfills a predetermined criterion (K), and
f) the regulator (R) is adjusted by the thus determined control parameters (SP),
**characterized in**
**that** a plurality of dynamic reactions of a grid component (G2, HVDC) to control signals is recorded by means of sensors, and that a further component model (KM2, LKM) of the grid component (G2, HVDC) is generated and adjusted in such a way that it reproduces the plurality of dynamic reactions.

2. Method according to Claim 1, **characterized in that**
the control parameters (SP) are determined in such a way that the dynamic reaction (DDR, DR) of the first grid component (HVDC) stabilizes the electrical grid (SN),

3. Method according to any one of the preceding claims, **characterized in**
**that** a second grid component (G2) of the electrical grid (SN) is regulated as a function of a second control signal (SS2), that a second component model (KM2) of the second grid component (G2) is imported to determine a second dynamic reaction (DR2) of the second grid component (G2) to the second control signal (SS2) and
**that** the dynamic reaction (DDR, DR) in process stage e) is determined by means of the second component model (KM2).

4. Method according to any one of the preceding claims, **characterized in**
**that** from the first component model (KM) and/or the network model (NM) a first component model (LKM) linearized around the current operating status (STAT) and/or a network model linearized around the current operating status (STAT) is generated.

5. Method according to Claim 4, **characterized in that** by means of the linearized first component model (LKM) and/or the linearized network model dynamic oscillation modes of the electrical grid (SN) can be determined, and
that the control parameters (SP) can be determined in such a way that the regulator (R) counteracts the determined oscillation modes.

6. Method according to Claim 4 or 5, **characterized in**
in process stage (e) the linearized first component model (LKM) is used as the first component model and/or the linearized network model is used as the network model for determining the control parameters (SP),
that by means of a detailed simulation model (KM, NM), as a function of the current operating status (STAT) and the determined control parameters (SP) a detailed dynamic reaction (DDR) of the first network component (HVDC) is determined, and that the regulator (R) is adjusted by the determined control parameters (SP) if the detailed dynamic reaction (DDR) fulfills the predetermined criterion (K).

7. Method according to Claim 6, **characterized in**
**that** as a detailed simulation model, the first component model (KM), the second component model (KM2), the network model (NM), a non-linear simulation model and/or a black box simulation model is used.

8. Control device (CPS) for controlling an electrical grid (SN) with several grid components, set up for implementing a method according to any one of the preceding claims.

9. Computer program product set up for implementing a method according to any of Claims 1 to 7.

10. Computer-readable storage medium with a computer program product according to Claim 9.

## Revendications

1. Procédé de commande d'un réseau électrique (SN) comprenant plusieurs composantes de réseau, dans lequel
a) des données d'exploitation (PD) physiques des composantes de réseau sont détectées par capteur,
b) à l'aide des données d'exploitation (PD) physiques détectées, un état d'exploitation (STAT) actuel du réseau électrique (SN) est calculé au moyen d'un modèle de réseau (NM) du réseau électrique (SN) recouvrant toutes les composantes du réseau,
c) une première composante de réseau (HVDC) est régulée en fonction d'un signal de commande (SS) au moyen d'un régulateur (R) pouvant être réglé par des paramètres de commande (SP) avec circuit de régulation (RK) interne aux composantes de réseau,
d) un premier modèle de composante (KM, LKM) de la première composante de réseau (HVDC) est lu pour calculer une réaction dynamique (DDR, DR) de la première composante de réseau (HVDC) sur le signal de commande (SS) en fonction des paramètres de commande (SP),
e) dans le cadre d'un procédé d'optimisation, les paramètres de commande (SP) sont variés, dans lequel au moyen du premier modèle de composante (KM, LKM) ainsi que du modèle de réseau (NM), en fonction de l'état d'exploitation (STAT) actuel et des paramètres de commande (SP) qui ont été variés, la réaction dynamique (DDR, DR) est calculée et les paramètres de commande (SP) sont calculés de façon à ce que la réaction dynamique (DDR, DR) remplisse un critère (K) prédéfini, et
f) le régulateur (R) est réglé par les paramètres de commande (SP) ainsi calculés,
**caractérisé en ce**
**qu'**une pluralité de réactions dynamiques d'une composante de réseau (G2, HVDC) est détectée par capteur sur des signaux de commande,
et
**qu'**un autre modèle de composante (KM2, LKM) de la composante de réseau (G2, HVDC) est généré et ainsi réglé qu'il reproduit la pluralité de réactions dynamiques.

2. Procédé selon la revendication 1, **caractérisé en ce que** les paramètres de commande (SP) sont ainsi calculés que la réaction dynamique (DDR, DR) de la première composante de réseau (HVDC) stabilise le réseau électrique (SN).

3. Procédé selon l'une des revendications précédentes, **caractérisé en ce qu'**une deuxième composante de réseau (G2) du réseau électrique (SN) est régulée en fonction d'un deuxième signal de commande (SS2),
qu'un deuxième modèle de composante (KM2) de la deuxième composante de réseau (G2) est lu pour calculer une deuxième réaction dynamique (DR2) de la deuxième composante de réseau (G2) sur le deuxième signal de commande (SS2), et
que la réaction dynamique (DDR, DR) à l'étape de procédé e) est calculée au moyen du deuxième modèle de composante (KM2).

4. Procédé selon l'une des revendications précédentes, **caractérisé en ce qu'**à partir du premier modèle de composante (KM) et/ou du modèle de réseau (NM), un premier modèle de composante (LKM) linéarisé sur l'état d'exploitation (STAT) actuel et/ou un modèle de réseau linéarisé sur l'état d'exploitation (STAT) actuel est généré.

5. Procédé selon la revendication 4, **caractérisé en ce qu'**au moyen du premier modèle de composante (LKM) linéarisé et/ou du modèle de réseau linéarisé, des modes d'oscillation dynamiques du réseau électrique (SN) sont calculés et que les paramètres de commande (SP) sont calculés de façon à ce que le régulateur (R) contre-commande les modes d'oscillation calculés.

6. Procédé selon la revendication 4 ou 5, **caractérisé en ce qu'**à l'étape de procédé e), le premier modèle de composante (LKM) linéarisé est employé en tant que premier modèle de composante et/ou le modèle de réseau linéarisé est employé en tant que modèle de réseau pour calculer les paramètres de commande (SP),
qu'au moyen d'un modèle de simulation détaillé (KM, NM), en fonction de l'état d'exploitation (STAT) actuel et des paramètres de commande (SP) calculés, une réaction dynamique détaillée (DDR) de la première composante de réseau (HVDC) est calculée, et
que le régulateur (R) est réglé par les paramètres de commande (SP) calculés, dans la mesure où la réaction dynamique détaillée (DDR) remplit le critère (K) prédéfini.

7. Procédé selon la revendication 6, **caractérisé en ce qu'**en tant que modèle de simulation détaillé, le premier modèle de composante (KM), le deuxième modèle de composante (KM2), le modèle de réseau (NM), un modèle de simulation non linéaire et/ou un modèle de simulation black box est/sont employé(s).

8. Dispositif de commande (CPS) pour commander un réseau électrique (SN) comprenant plusieurs composantes de réseau, agencé pour exécuter un procédé selon l'une des revendications précédentes.

9. Produit de programme informatique agencé pour exécuter un procédé selon l'une des revendications 1 à 7.

10. Support de mémoire lisible par ordinateur comprenant un produit de programme informatique selon la revendication 9.
